# EUROPÄISCHE PATENTSCHRIFT

(11) **EP 3 382 238 B1**
(45) Veröffentlichungstag und Bekanntmachung des Hinweises auf die Patenterteilung: **16.12.2020**
(21) Anmeldenummer: 17305393.5
(22) Anmeldetag: 31.03.2017
(51) Int. Cl.: G06K 19/077, F16K 7/12, F16K 37/00, G06K 19/07, F16J 3/02

(54) **MEMBRAN UND VERFAHREN ZUR HERSTELLUNG DER MEMBRAN**
MEMBRANE AND METHOD OF MANUFACTURING THE MEMBRANE
MEMBRANE ET SON PROCÉDÉ DE FABRICATION

(43) Veröffentlichungstag der Anmeldung: 03.10.2018
(73) Patentinhaber: GEMÜ Gebr. Müller Apparatebau GmbH & Co. Kommanditgesellschaft, 74653 Ingelfingen (DE)
(72) Erfinder: LEBONTE, Christophe, F-67210 Niedemai (FR); MEIER, Rolf, D-77955 Ettenheim (DE); RUOCCO, Romain, F-67810 Holtzheim (FR)
(74) Vertreter: DREISS Patentanwälte PartG mbB

(56) Entgegenhaltungen:
- EP-A1- 2 749 407
- EP-A2- 1 058 005
- WO-A1-2010/082945
- WO-A1-2015/010810
- WO-A1-2016/192970

## Beschreibung

Die Erfindung betrifft eine Membran für ein Membranventil nach dem Oberbegriff des Anspruchs 1 sowie ein Verfahren zur Herstellung der Membran nach dem Oberbegriff eines nebengeordneten Anspruchs.

Membrane für Membranventile, welche aus Polytetrafluorethylen, PTFE, hergestellt sind, sind allgemein bekannt. Dieses Material weist eine niedrige Oberflächenspannung auf, weshalb es insbesondere im chemischen Anwendungsbereich Verwendung findet.

Gleichzeitig besteht der kundenseitige und herstellerseitige Bedarf, eine Rückverfolgbarkeit der einzelnen PTFE-Membrane zu ermöglichen.

Des Weiteren ist bekannt, dass zu der Herstellung der Membran das Material PTFE über einen Zeitraum von mehreren Stunden einer hohen Temperatur, insbesondere im Bereich von 370-380 °C, ausgesetzt ist. Elektronische Datenträger sind grundsätzlich nicht dazu geeignet, unter diesen Fertigungsbedingungen in das Material PTFE eingebracht zu werden, da sie durch diese Bedingungen beschädigt oder zerstört werden.

Die Druckschrift WO 2015/010810 A1 offenbart eine Membran, welche aus mehreren Lagen aufgebaut ist, wobei mindestens eine der Lagen aus einem Elastomer besteht. In der Membran ist ein elektronischer Datenträger angeordnet, wobei die Membran eine obere und eine untere Schicht aufweist, und wobei der Datenträger von den Lagen der Membran und der oberen und der unteren Schicht umschlossen ist.

Die Druckschrift EP 1 058 005 A2 offenbart eine Pumpmembran, welche eine Schicht aus Polytetrafluroethylen und einen integrierten Zapfen umfasst.

Mithin ist es Aufgabe der Erfindung, auch für PTFE-Membrane die Rückverfolgbarkeit zu ermöglichen.

Die Aufgabe wird durch eine Membran nach dem Anspruch 1 sowie ein Verfahren zur Herstellung der Membran nach einem nebengeordneten Anspruch gelöst.

Die vorgeschlagene Membran ist dadurch gekennzeichnet, dass ein elektronischer Datenträger zwischen der PTFE aufweisenden Membran und einer Halteschicht angeordnet ist. Durch den mittels der Halteschicht zur Membran festgelegten elektronischen Datenträger wird die Rückverfolgbarkeit der Membran ermöglicht.

Die erste Ausnehmung ist innerhalb einer zweiten Ausnehmung der Membran angeordnet, wobei die zweite Ausnehmung um die Öffnung der ersten Ausnehmung herum eine Verbindungsfläche bereitstellt, und wobei die Halteschicht mit der Verbindungsfläche verbunden ist. Mithin springt die Verbindungsfläche gegenüber der Oberfläche der Membran zurück und die Verbindung zwischen der Halteschicht und der Membran wird so vor einer Beschädigung geschützt.

Eine vorteilhafte Ausführungsform zeichnet sich dadurch aus, dass die Membran eine erste Ausnehmung umfasst, in welcher der elektronische Datenträger zumindest abschnittsweise aufgenommen ist und deren Öffnung mit der Halteschicht verschlossen ist. So trägt bereits die Ausformung der Membran zur Festlegung des elektronischen Datenträgers bei. Gleichzeitig ist der elektronische Datenträger durch die erste Ausnehmung vor Beschädigung geschützt angeordnet.

Eine vorteilhafte Weiterbildung zeichnet sich dadurch aus, dass sich die Öffnung der ersten Ausnehmung auf einer der Medienseite der Membran abgewandten Seite befindet. Vorteilhaft wird so das Risiko eines Kontakts zwischen elektronischem Datenträger und Prozessmedium verringert.

Eine vorteilhafte Weiterbildung zeichnet sich dadurch aus, dass die erste Ausnehmung in einer Lasche angeordnet ist, welche von einer Schmalseite der Membran abragt. Hierdurch wird der elektronische Datenträger physisch von anderen Funktionsbereichen der Membran getrennt und ein Auslesen des elektronischen Datenträgers vereinfacht sich für den Anwender.

Eine vorteilhafte Ausführungsform zeichnet sich dadurch aus, dass die Halteschicht materialschlüssig mit der Membran verbunden ist. Vorteilhaft wird durch den Materialschluss eine fluid-dichte Festlegung des elektronischen Datenträgers erreicht.

Eine vorteilhafte Ausführungsform zeichnet sich dadurch aus, die Halteschicht ein Perfluoralkoxy-Polymer, PFA, umfasst. Dieses Material weist vorteilhaft die Eigenschaft auf, dass es sich mit dem PTFE materialschlüssig verbinden lässt.

Eine vorteilhafte Ausführungsform zeichnet sich dadurch aus, dass als elektronischer Datenträger ein RFID-Chip (RFID = radio frequency identification) vorhanden ist.

Eine vorteilhafte Weiterbildung zeichnet sich dadurch aus, dass der RFID-Chip scheibenförmig ausgebildet ist.

Eine vorteilhafte Weiterbildung zeichnet sich dadurch aus, dass eine Scheibenfläche des RFID-Chips in einer zu einer Membranebene parallelen Ebene bzw. in der Membranebene ausgerichtet ist. Dies trägt vorteilhaft zu einer kompakten Ausführung der Membran bei, was sich vorteilhaft auf die Herstellung derselben auswirkt.

Das vorgeschlagene Verfahren zum Herstellen einer Membran für ein Membranventil ist dadurch gekennzeichnet, dass ein elektronischer Datenträger zwischen der Membran und einer Halteschicht angeordnet wird.

Das Verfahren umfasst: Herstellen der Membran mit einer Ausnehmung; Anordnen des elektronischen Datenträgers in der Ausnehmung; und Verschließen der Ausnehmung mit dem darin angeordneten elektronischen Datenträger durch die Halteschicht. Auf diese Art und Weise kann trotz der niedrigen Oberflächenspannung der PTFE-Membran der elektronische Datenträger zu der Membran festgelegt werden.

Das Verschließen der Ausnehmung umfasst: Anordnen der Halteschicht zwischen einem Anpresswerkzeug und einer Verbindungsfläche der Membran, Anpressen des Anpresswerkzeugs mit einem Anpressdruck und mit einer Anpresstemperatur, wobei das Anpresswerkzeug eine Anpressfläche aufweist, welche zu der Verbindungsfläche korrespondiert.

Eine vorteilhafte Weiterbildung zeichnet sich dadurch aus, dass zum Anpressen des Anpresswerkzeugs zwischen die Halteschicht und das Anpresswerkzeug temporär eine entfernbare Schutzfolie, insbesondere aus einem Polimidfilm, insbesondere aus KAPTON, angeordnet wird. Hierdurch wird verhindert, dass die Halteschicht an der Anpressfläche des Anpresswerkzeugs anhaftet.

Weitere Merkmale und Vorteile der Erfindung finden sich in der nachfolgenden Beschreibung von Ausführungsbeispielen, welche anhand der Figuren der Zeichnung erläutert sind. In der Zeichnung zeigen:
Figur 1 eine Membran für ein Membranventil in einer perspektivischen schematischen Ansicht;
Figuren 2, 3, 4, 5 und 6 einen schematischen Schnitt aus Figur 1; und
Figuren 7 und 8 jeweils ein schematisches Ablaufdiagramm.

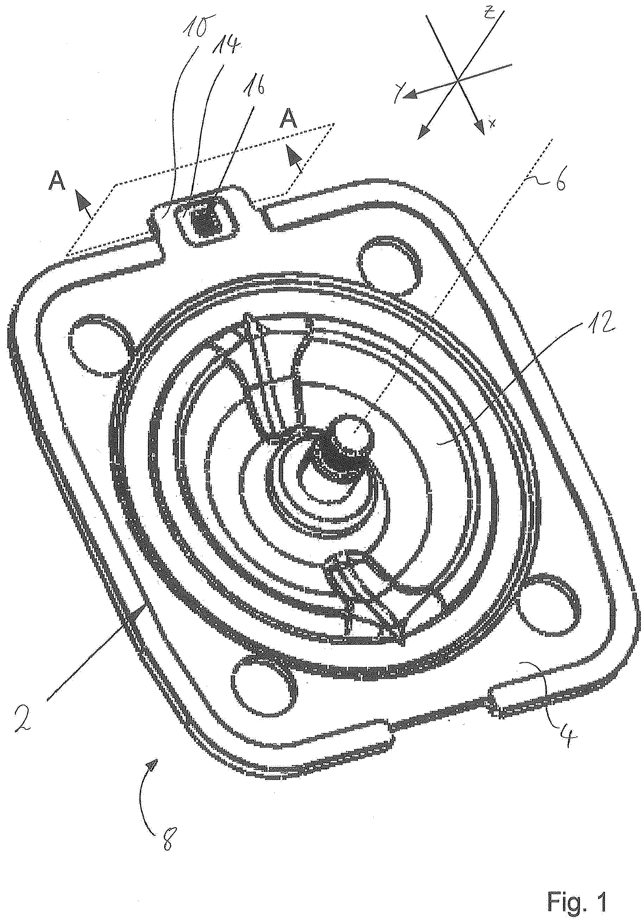

In der Figur 1 ist eine Membran für ein Membranventil in ihrer Gesamtheit mit dem Bezugszeichen 2 versehen. Der Körper der Membran 2 ist aus Polytetrafluorethylen, PTFE, gefertigt. Die Membran 2 ist dazu vorgesehen, zwischen einem Antriebskörper und einem Ventilkörper des Membranventils angeordnet zu werden. In einem radial äußeren Klemmabschnitt 4 wird die Membran 2 Fluid-dicht zwischen Antriebskörper und Ventilkörper verklemmt. Entlang einer Zustellachse 6 wird die Membran 2 bewegt. Die Membran 2 weist eine Rotationssymmetrie um die Zustellachse 6 auf. Bei der Bewegung entlang der Zustellachse 6 bewirkt die Membran 2 ein Öffnen bzw. Schließen eines Fluidkanals in dem Ventilkörper. Hierbei ist eine Mediumseite 8 der Membran 2 in Kontakt mit dem gestellten Prozessfluid.

Parallel zu einer xy-Ebene spannt die Membran 2 eine Membranebene auf. Die Membran 2 weist eine in der Membranebene von einer Schmalseite der Membran 2 abragende Lasche 10 auf. Ein zur Bewegung der Membran 2 vorgesehener Arbeitsabschnitt 12 der Membran 2 ist radial innerhalb des Klemmabschnitts 4 angeordnet. Die Lasche 10 hingegen ist radial außerhalb des Klemmabschnitts 4 angeordnet. Zwischen der Membran 2 und einer film-artigen Halteschicht 14 ist ein elektronischer Datenträger 16, insbesondere ein radio frequency identification, RFID, chip angeordnet. Der elektronische Datenträger 16 ist flächig insbesondere Scheiben-förmig ausgebildet und liegt mit der von ihm aufgespannt Ebene im Wesentlichen in der Membranebene bzw. einer Laschenebene.

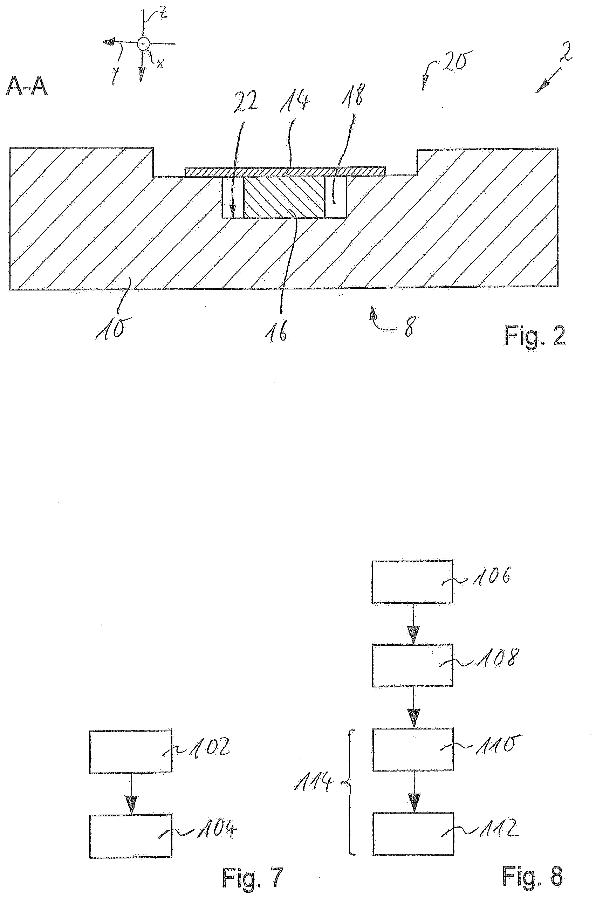

Figur 2 zeigt einen schematischen Schnitt A-A aus Figur 1. Der elektronische Datenträger 16 ist in einer ersten Ausnehmung 18 angeordnet, deren Öffnung mit der Halteschicht 14 Fluid-dicht verschlossen ist. Die erste Ausnehmung 18 ist auf einer der Mediumseite 8 gegenüberliegenden Seite 20 der Membran 2 angeordnet. Der elektronische Datenträger 16 wird durch eine Bodenfläche 22 der ersten Ausnehmung 18 und die Halteschicht 14, welche auch als Folie ausgebildet sein kann, in z-Richtung formschlüssig festgelegt. Die Halteschicht 14 steht bevorzugt unter einer Spannung und drückt den elektronischen Datenträger 16 in z-Richtung, womit sich ein Reibschluss in einer xy-Ebene ergibt. Mithin legt die Halteschicht 14 den elektronischen Datenträger 16 gegenüber der Lasche 10 fest.

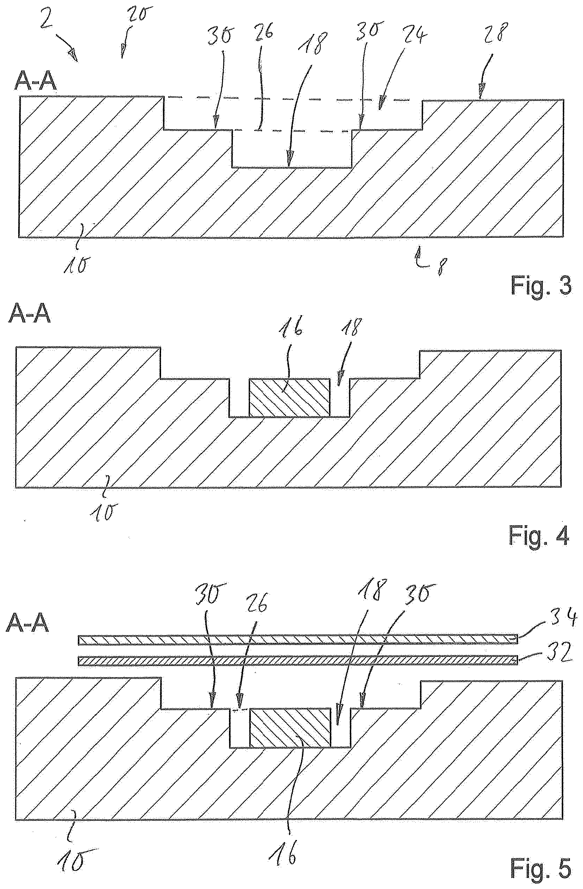

Figur 3 zeigt in einem schematischen Schnitt A-A aus Figur 1 einen Fertigungsschritt ohne den elektronischen Datenträger 16 und ohne die Halteschicht 14. Der dargestellte Fertigungsschritt umfasst eine Ausformung des PTFE-Materials. Die erste Ausnehmung 18 befindet sich innerhalb einer zweiten Ausnehmung 24. Um die Öffnung 26 der ersten Ausnehmung 18 herum stellt die zweite Ausnehmung 24 eine gegenüber einer Oberfläche 28 der Lasche 10 zurückspringende Verbindungsfläche 30 zur Verbindung mit der Halteschicht 14 bereit.

Figur 4 zeigt einen weiteren Fertigungsschritt, bei dem der elektronische Datenträger 16 in die erste Ausnehmung 18 eingelegt wird.

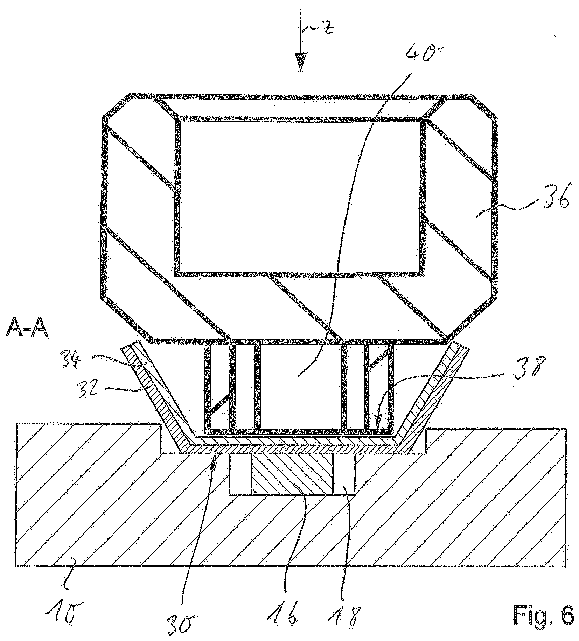

Figur 5 zeigt einen weiteren Fertigungsschritt in einem schematischen Schnitt A-A aus Figur 1. Die Öffnung 26 der ersten Ausnehmung 18 wird mit einer ersten Schicht 32 und einer zweiten Schicht 34 überdeckt. Aus der ersten Schicht 32 wird im Nachgang die Halteschicht 14. Die zweite Schicht 34 dient als Temperaturschutzschicht für den in Figur 6 erläuterten Fertigungsschritt. Die beiden Schichten 32 und 34 überdecken die Öffnung 26 und weitergehend zumindest die Verbindungsfläche 30.

Figur 6 zeigt einen weiteren Fertigungsschritt in einem schematischen Schnitt A-A aus Figur 1. Ein Anpresswerkzeug 36 weist eine zur Verbindungsfläche 30 korrespondierende Anpressfläche 38 auf. Die Anpressfläche 38 begrenzt einen innen liegenden Hohlraum 40. Die Anpressfläche 38 wird nach der Anordnung der Schichten 32 und 34 bei etwa 400 °C eine Zeitdauer von 10 Sekunden auf die zweite Schicht 34 gepresst, wobei die Anpressfläche 38 die Verbindungsfläche 30 überdeckt. Hierzu weist das Anpresswerkzeug ein nicht gezeigtes Heizelement auf. Die Erhitzung und Anpressung des Anpresswerkzeugs 36 bewirkt, dass sich die Schicht 32 im Bereich der Verbindungsfläche 30 mit dem PTFE-Material der Lasche 10 materialschlüssig verbindet. Damit wird der elektronische Datenträger 16 in der ersten Ausnehmung 18 Fluid-dicht eingeschlossen. Anschließend wird das Anpresswerkzeug 36 entgegen der z-Richtung entfernt. Aufgrund der materialschlüssigen Verbindung der ersten Schicht 32 mit der Lasche 10 kann ein überschüssiger Rest der Schicht 32 abgezogen und entfernt werden und es entsteht die Halteschicht 14, wie sie in Figur 2 gezeigt ist.

Durch den Hohlraum 40 wird verhindert, dass sich die hohe Verbindungstemperatur von etwa 400 °C unmittelbar auf den elektronischen Datenträger 16 überträgt. Bei der zweiten Schicht 34 handelt es sich um einen Polimidfilm, insbesondere aus KAPTON (KAPTON ist eine eingetragene Marke der E. I. DU PONT DE NEMOURS AND COMPANY). In einer alternativen oder zusätzlichen Ausführungsform kann die Anpressfläche 38 zusätzlich eine Antihaft-Beschichtung aufweisen, womit die zweite Schicht 34 bei der Herstellung entfallen kann.

Figur 7 zeigt ein schematisches Ablaufdiagramm. In einem ersten Schritt 102 wird die Membran 2 hergestellt. In einem zweiten Schritt 104 wird der elektronische Datenträger 16 zwischen der Membran 2 und der Halteschicht 14 angeordnet.

Figur 8 zeigt ein weiteres schematisches Ablaufdiagramm. In einem dritten Schritt 106 wird die Membran 2 mit der Ausnehmung 18 aus PTFE hergestellt. In einem vierten Schritt 108 wird der elektronische Datenträger 16 in der Ausnehmung 18 angeordnet. In einem fünften Schritt 110 wird die die Schicht 32 bzw. die Halteschicht 14 zwischen dem Anpresswerkzeug 36 und der Verbindungsfläche 30 angeordnet.

In einem sechsten Schritt 112 wird das Anpresswerkzeug 36 mit einem Anpressdruck und mit der Anpresstemperatur im Bereich der Verbindungsfläche 30 in Richtung der Lasche 10 gedrückt. Die beiden Schritte 110 und 112 können auch als Fertigungsschritt 114 zum Verschließen der Ausnehmung 18 bezeichnet werden.

## Patentansprüche

1. Eine Membran (2) für ein Membranventil, wobei die Membran (2) aus Polytetrafluorethylen, PTFE, hergestellt ist, **dadurch gekennzeichnet,**
- **dass** ein elektronischer Datenträger (16) zwischen der Membran (2) und einer Halteschicht (14) angeordnet ist,
- **dass** die Membran (2) eine erste Ausnehmung (18) umfasst, in welcher der elektronische Datenträger (16) zumindest abschnittsweise aufgenommen ist und deren Öffnung (26) mit der Halteschicht (14) verschlossen ist,
- **dass** die erste Ausnehmung (18) innerhalb einer zweiten Ausnehmung (24) der Membran (2) angeordnet ist,
- **dass** die zweite Ausnehmung (24) um die Öffnung (26) der ersten Ausnehmung (18) herum eine Verbindungsfläche (30) bereitstellt, und
- **dass** die Halteschicht (14) mit der Verbindungsfläche (30) verbunden ist.

2. Die Membran (2) nach dem Anspruch 1, wobei sich die Öffnung (26) der ersten Ausnehmung (18) auf einer einer Medienseite (8) der Membran (2) abgewandten Seite (20) befindet.

3. Die Membran (2) gemäß dem Anspruch 1 oder 2, wobei die erste Ausnehmung (18) in einer Lasche (10) angeordnet ist, welche von einer Schmalseite der Membran (2) abragt.

4. Die Membran (2) nach einem der vorstehenden Ansprüche, wobei die Halteschicht (14) materialschlüssig mit der Membran (2) verbunden ist.

5. Die Membran (2) nach einem der vorstehenden Ansprüche, wobei die Halteschicht (14) ein Perfluoralkoxy-Polymer, PFA, umfasst.

6. Die Membran (2) nach einem der vorstehenden Ansprüche, wobei als elektronischer Datenträger (16) ein RFID-Chip (RFID = radio frequency identification) vorhanden ist.

7. Die Membran (2) nach Anspruch 6, wobei der RFID-Chip scheibenförmig ausgebildet ist.

8. Die Membran (2) nach Anspruch 7, wobei eine Scheibenfläche des RFID-Chips in einer zu einer Membranebene parallelen Ebene bzw. in der Membranebene ausgerichtet ist.

9. Ein Verfahren zum Herstellen einer Membran (2) für ein Membranventil, wobei die Membran (2) aus Polytetrafluorethylen, PTFE, hergestellt (102) wird, wobei ein elektronischer Datenträger (16) zwischen der Membran (2) und einer Halteschicht (14) angeordnet (104) wird, **gekennzeichnet durch** die Schritte:
- Herstellen (106) der Membran (2) mit einer ersten Ausnehmung (18) und einer zweiten Ausnehmung (24), so dass die erste Ausnehmung (18) innerhalb der zweiten Ausnehmung (24) der Membran (2) angeordnet ist, wobei die zweite Ausnehmung (24) um die Öffnung (26) der ersten Ausnehmung (18) herum eine Verbindungsfläche (30) bereitstellt;
- Anordnen (108) des elektronischen Datenträgers (16) in der ersten Ausnehmung (18); und
- Verschließen (114) der ersten Ausnehmung (18) mit dem darin angeordneten elektronischen Datenträger (16) durch die Halteschicht (14), wobei die Halteschicht (14) mit der Verbindungsfläche (30) verbunden ist.

10. Das Verfahren nach dem Anspruch 9, wobei das Verschließen (114) der ersten Ausnehmung (18) umfasst:
- Anordnen (110) der Halteschicht (14) zwischen einem Anpresswerkzeug (36) und einer Verbindungsfläche (30) der Membran (2),
- Anpressen (112) des Anpresswerkzeugs (36) mit einem Anpressdruck und mit einer Anpresstemperatur, wobei das Anpresswerkzeug (36) eine Anpressfläche (38) aufweist, welche zu der Verbindungsfläche (30) korrespondiert.

11. Das Verfahren nach dem Anspruch 10, wobei zum Anpressen des Anpresswerkzeugs (36) zwischen die Halteschicht (14) und das Anpresswerkzeug (36) temporär eine entfernbare Schutzfolie (34), insbesondere aus einem Polimidfilm, insbesondere aus KAPTON, angeordnet wird.

## Claims

1. Diaphragm (2) for a Diaphragm valve, the Diaphragm (2) being produced from polytetrafluoroethylene, PTFE, **characterized in**
- **that** an electronic data carrier (16) is arranged between the Diaphragm (2) and a retaining layer (14),
- **that** the Diaphragm (2) includes a first recess (18) in which the electronic data carrier (16) is housed, at least in portions, and of which the opening (26) is closed by the retaining layer (14),
- **that** the first recess (18) is arranged within a second recess (24) in the Diaphragm (2),
- **that** the second recess (24) provides a connection surface (30) around the opening (26) in the first recess (18), and
- **that** the retaining layer (14) is connected to the connection surface (30).

2. Diaphragm (2) according to claim 1, wherein the opening (26) in the first recess (18) is located on a side (20) that is remote from a media side (8) of the Diaphragm (2) .

3. Diaphragm (2) according to claim 1 or 2, wherein the first recess (18) is arranged in a tab (10) that projects from a narrow side of the Diaphragm (2).

4. Diaphragm (2) according to any of the preceding claims,
wherein the retaining layer (14) is integrally bonded to the Diaphragm (2).

5. Diaphragm (2) according to any of the preceding claims,
wherein the retaining layer (14) includes a perfluoroalkoxy polymer, PFA.

6. Diaphragm (2) according to any of the preceding claims,
wherein an RFID chip (RFID = radio frequency identification) is present as the electronic data carrier (16).

7. Diaphragm (2) according to claim 6, wherein the RFID chip is disk-shaped.

8. Diaphragm (2) according to claim 7, wherein a disk surface of the RFID chip is oriented in a plane that is parallel to a Diaphragm plane or in the Diaphragm plane.

9. Method for producing a Diaphragm (2) for a Diaphragm valve, the Diaphragm (2) being produced (102) from polytetrafluoroethylene, PTFE, wherein an electronic data carrier (16) is arranged (104) between the Diaphragm (2) and a retaining layer (14), **characterized by** the followings steps:
- producing (106) the Diaphragm (2) having a first recess (18) and a second recess (24) such that the first recess is arranged within the second recess (24) of the Diaphragm (2), and wherein the second recess (24) provides a connection surface (30) around the opening (26) in the first recess (18);
- arranging (108) the electronic data carrier (16) in the first recess (18); and
- closing (114) the first recess (18) having the electronic data carrier (16) arranged therein by means of the retaining layer (14), wherein the retaining layer (14) is connected to the connection surface (30).

10. Method according to claim 9, wherein closing (114) the first recess (18) includes:
- arranging (110) the retaining layer (14) between a pressing tool (36) and a connection surface (30) of the Diaphragm (2),
- pressing (112) the pressing tool (36) by means of pressing pressure and at a pressing temperature, wherein the pressing tool (36) comprises a pressing surface (38) corresponding to the connection surface (30).

11. Method according to claim 10, wherein, in order to press the pressing tool (36), a removable protective film (34), in particular consisting of a polyimide film, in particular consisting of Kapton, is temporarily arranged between the retaining layer (14) and the pressing tool (36).

## Revendications

1. Membrane (2) pour une soupape à membrane, dans laquelle la membrane (2) est constituée de polytétrafluoroéthylène, PTFE, **caractérisée en ce que**,
- un support de données électronique (16) est agencé entre la membrane (2) et une couche de support (14),
- la membrane (2) présente un premier évidement (18), dans lequel le support de données électronique (16) est reçu au moins par tronçons et dont l'ouverture (26) est fermée par la couche de support (14),
- le premier évidement (18) est agencé à l'intérieur d'un second évidement (24) de la membrane (2),
- le second évidement (24) fournit une surface de connexion (30) autour de l'ouverture (26) du premier évidement (18), et
- la couche de support (14) est connectée à la surface de connexion (30).

2. Membrane (2) selon la revendication 1, dans laquelle l'ouverture (26) du premier évidement (18) est située sur un côté (20) opposé à un côté de milieu (8) de la membrane (2).

3. Membrane (2) selon la revendication 1 ou 2, dans laquelle le premier évidement (18) est agencé dans une patte (10) qui fait saillie depuis un côté étroit de la membrane (2).

4. Membrane (2) selon l'une quelconque des revendications précédentes, dans laquelle la couche de support (14) est connectée par matière à la membrane (2).

5. Membrane (2) selon l'une quelconque des revendications précédentes, dans laquelle la couche de support (14) comprend un polymère perfluoroalcoxy, PFA.

6. Membrane (2) selon l'une quelconque des revendications précédentes, dans laquelle une puce RFID (RFID = identification par radiofréquence) est présente en tant que support de données électronique (16).

7. Membrane (2) selon la revendication 6, dans lequel la puce RFID est réalisée en forme de disque.

8. Membrane (2) selon la revendication 7, dans laquelle une surface de disque de la puce RFID est orientée dans un plan parallèle à un plan de membrane ou dans le plan de la membrane.

9. Procédé de fabrication d'une membrane (2) pour une soupape à membrane, dans lequel la membrane (2) étant réalisée (102) en polytétrafluoroéthylène, PTFE, dans lequel un support de données électronique (16) est agencé (104) entre la membrane (2) et une couche de support (14), **caractérisée par** les étapes consistant à:
- réaliser (106) la membrane (2) avec un premier évidement (18) et un second évidement (24), de telle sorte que le premier évidement (18) soit agencé dans le second évidement (24) de la membrane (2), dans lequel le second évidement (24) fournit une surface de connexion (30) autour de l'ouverture (26) du premier évidement (18) ;
- agencer (108) le support de données électronique (16) dans le premier évidement (18); et
- fermer (114) le premier évidement (18) avec le support de données électronique (16) agencé en son sein par l'intermédiaire de la couche de support (14), dans lequel la couche de support (14) est connectée à la surface de connexion (30).

10. Procédé selon la revendication 9, dans lequel la fermeture (114) du premier évidement (18) comprend les étapes consistant à:
- agencer (110) la couche de support (14) entre un outil de pressage (36) et une surface de connexion (30) de la membrane (2),
- presser (112) l'outil de pressage (36) avec une pression de pressage et une température de pressage, dans lequel l'outil de pressage (36) présente une surface de pressage (38) qui correspond à la surface de connexion (30).

11. Procédé selon la revendication 10, dans lequel lors du pressage de l'outil de pressage (36), un film protecteur amovible (34) est agencé temporairement entre la couche de support (14) et l'outil de pressage (36), en particulier un film de polyimide, en particulier en KAPTON.
